# FASCICULE DE BREVET EUROPEEN

(11) **EP 1 352 781 B1**
(45) Date de publication et mention de la délivrance du brevet: **11.04.2007**
(21) Numéro de dépôt: 03290774.3
(22) Date de dépôt: 27.03.2003
(51) Int. Cl.: B60Q 1/115, B60Q 1/14

(54) **Procede de commande d'allumage d'un dispositif d'eclairage et vehicule automobile permettant la mise en oeuvre d'un tel procede**
Verfahren zur Einschaltsteuerung einer Beleuchtungsvorrichtung und Kfz zur Umsetzung eines solchen Verfahren
Control method for switching on a lighting device and vehicle to implement such a method

(30) Priorité: 11.04.2002 FR 0204547
(43) Date de publication de la demande: 15.10.2003
(73) Titulaire: Renault s.a.s., 92100 Boulogne Billancourt (FR)
(72) Inventeur: Cugny, Nicolas, 78100 Saint-Germain (FR); Doynel, Yves, 78000 Versailles (FR); Jouanne, Pierre, 78140 Velizy (FR)

(56) Documents cités:
- GB-A- 2 325 757

## Description

La présente invention concerne un procédé de commande d'allumage d'un dispositif d'éclairage d'un véhicule automobile selon les caractéristiques techniques du préambule de la revendication 11 et un véhicule automobile comprenant des moyens de mise en oeuvre d'un tel procédé, selon les caractéristiques techniques du préambule de la revendication 11.

Des véhicules sont équipés de dispositifs d'éclairage permettant un réglage de la position de projecteurs en fonction de la charge du véhicule pour orienter un faisceau lumineux issu des projecteurs de façon à éclairer la chaussée convenablement, tout en évitant d'éblouir des conducteurs circulant en sens inverse.

La publication GB-A-2325757 divulgue un dispositif de commande de la direction d'éclairage de projecteurs d'un véhicule automobile.

L'invention a pour objet un procédé de commande d'allumage d'un dispositif d'éclairage d'un véhicule automobile permettant au conducteur ou tout autre usager d'identifier ou éventuellement de vérifier le bon fonctionnement d'un système de réglage de la position de projecteurs du dispositif d'éclairage.

Cet objet est atteint par un procédé suivant les caractéristiques techniques de la revendication 11.

Par rabattre ou relever les projecteurs, on entend que l'on actionne tout ou partie des projecteurs afin de respectivement diminuer ou augmenter la portée du faisceau lumineux issu des projecteurs. On peut immobiliser temporairement le projecteur en position de portée minimale. Les projecteurs sont des projecteurs de feux de croisement, de feux de route, ou des projecteurs formant un bloc optique à feux de croisement et feux de routes intégrés.

Dans un mode de mise en oeuvre, on détermine la position finale en fonction de l'assiette du véhicule, pour tenir compte de la charge du véhicule, et pour adapter en conséquence le positionnement final des projecteurs afin d'obtenir un faisceau lumineux éclairant convenablement la chaussée, et sans éblouir des conducteurs circulant dans le sens opposé.

Dans un mode de mise en oeuvre, une position intermédiaire est déterminée en fonction de la position finale et de la position de portée minimale. Dans le cas de plusieurs positions intermédiaires, ces dernières peuvent également être déterminées en fonction du nombre de positions intermédiaires.

Afin de ne pas perturber le conducteur, la durée totale du cycle d'allumage est sensiblement égale ou inférieure à 3s, de préférence sensiblement égale ou inférieure à 2s et notamment sensiblement égale ou inférieure à 1s. La durée d'immobilisation des projecteurs dans la position de portée minimale et dans chacune des positions intermédiaires dépend du nombre de position intermédiaires et de la durée totale du cycle d'allumage. Les durées d'immobilisation des projecteurs peuvent être égales ou différentes. Dans un mode de mise en oeuvre préféré, on arrête les projecteurs dans chaque position intermédiaire pendant une même durée.

Dans un mode de mise en oeuvre, les positions intermédiaires sont réparties régulièrement entre la position de portée minimale et la position finale. Ceci permet une meilleure différenciation de chacune des positions des projecteurs. On peut par exemple prévoir une position intermédiaire située à mi-chemin entre la position de portée minimale et la position finale, ou deux positions intermédiaires situées au tiers et au deux tiers entre la position de portée minimale et la position finale.

Dans un mode de mise en oeuvre, on mesure la vitesse du véhicule et on positionne directement les projecteurs en position finale sans rabattre les projecteurs et les relever par paliers si la vitesse du véhicule est supérieure ou égale à une vitesse déterminée nulle ou de l'ordre de 15 km/h

Dans un mode de mise en oeuvre, on détecte l'état de fonctionnement du moteur, on positionne directement les projecteurs en position finale sans rabattre les projecteurs et les relever par paliers si le moteur est tournant.

L'invention concerne également un véhicule automobile comprenant un dispositif d'éclairage pourvu de projecteurs comprenant un réflecteur mobile, un actionneur capable de rabattre et relever le réflecteur, des moyens capteurs de l'état du véhicule, et des moyens de commande capables de réagir à l'allumage des projecteurs pour rabattre les projecteurs dans une position de portée minimale, et relever les projecteurs de la position de portée minimale vers une position finale en arrêtant temporairement les projecteurs dans au moins une position intermédiaire.

Avantageusement, les moyens capteurs comprennent un capteur de vitesse du véhicule, un capteur d'état de fonctionnement d'un moteur d'entraînement du véhicule et/ou un capteur d'assiette du véhicule. De tels capteurs permettent de commander les actionneurs pour rabattre ou relever les projecteurs en fonction de l'état véhicule, afin de ne pas perturber le conducteur, ou pour déterminer la position finale des projecteurs en fonction de l'assiette du véhicule, qui varie notamment avec la charge du véhicule.

La présente invention et ses avantages seront mieux compris à l'étude de la description détaillée de mode de mise en oeuvre pris à titre d'exemple nullement limitatif et illustrée par le dessins annexés, sur lesquels :
- la figure 1 est une vue schématique d'un dispositif d'éclairage d'un véhicule automobile ;
- la figure 2 est un graphique illustrant un procédé de commande d'allumage du dispositif selon la figure 1 ; et
- la figure 3 est un second graphique illustrant une variante du procédé de commande selon la figure 2.
- la figure 4 est un schéma-bloc illustrant les étapes d'un procédé de commande selon un aspect de l'invention

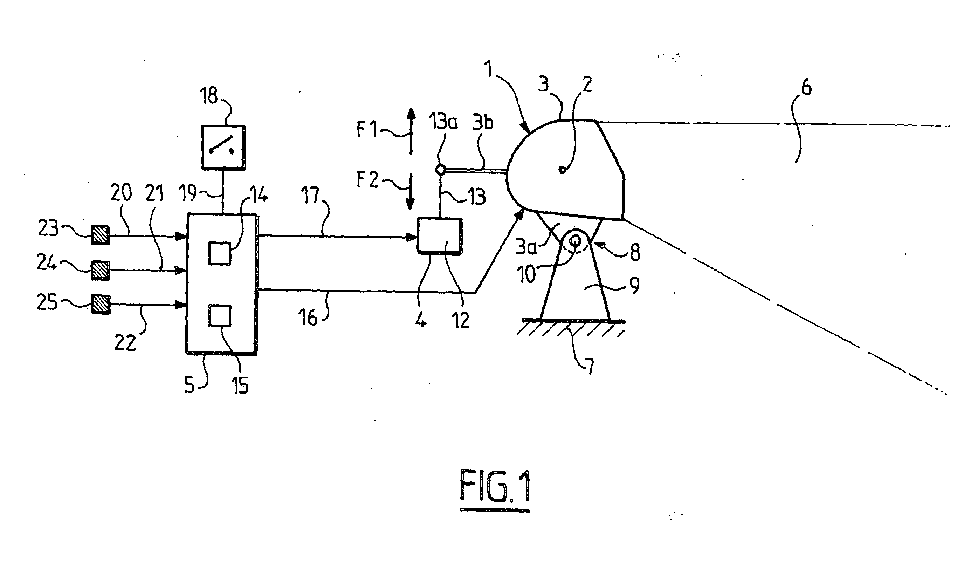

Sur la figure 1, un dispositif d'éclairage d'un véhicule automobile comprend un projecteur 1 comprenant une source lumineuse 2 et un réflecteur 3, un actionneur 4, et une unité de commande 5. Lorsque la source lumineuse 2 est allumée, le projecteur 1 émet un faisceau lumineux 6 éclairant la chaussée à l'avant du véhicule automobile non représenté.

Le réflecteur 3 est monté mobile sur la carrosserie 7 d'un véhicule automobile par l'intermédiaire d'une liaison pivot 8 d'axe sensiblement perpendiculaire à une direction d'avancement du véhicule automobile, et comprenant une chape 9 solidaire de la carrosserie 7, un axe 10 d'une part en liaison de rotation avec des extrémités des bras de la chape 9, et d'autre part relié à une portion d'accrochage 3a du réflecteur.

L'actionneur 4, situé en arrière du projecteur 1, comprend un corps fixe 12 et un organe mobile 13. L'organe mobile 13 possède une extrémité 13a en liaison de type pivot ou rotule avec une extrémité d'une tige de fixation 3b du réflecteur 3 saillante vers l'arrière du projecteur 1. L'organe mobile 13 peut être déplacé en translation selon une direction perpendiculaire à l'axe de la liaison pivot 8. Un déplacement de l'organe mobile 13 provoque un pivotement du réflecteur 3 autour de l'axe de la liaison pivot 8. Un déplacement de l'organe mobile 13 vers le haut, dans le sens de la flèche F1, permet de « rabattre » le projecteur 1 pour diminuer la portée du faisceau lumineux 6. Un déplacement de l'organe mobile 13 vers le bas, dans le sens de la flèche F2, permet de « relever » le projecteur 1 pour augmenter la portée du faisceau lumineux 6. La source lumineuse 2 peut être fixe ou mobile avec le réflecteur 3. La source lumineuse 2 peut être à titre d'exemple nullement limitatif une lampe halogène, une lampe à décharge, etc.

L'unité de commande 5 comprend un microprocesseur 14 et des moyens-mémoire 15 aptes à stocker un programme d'ordinateur pouvant être exécuté par le microprocesseur 14. L'unité de commande 5 est reliée au projecteur 1 par une liaison de commande 16 pour commander l'allumage ou l'extinction de la source lumineuse 2. L'unité de commande 5 est reliée à l'actionneur 4 par une liaison de commande 17. Un interrupteur 18 du projecteur 1 est relié à l'unité de commande 5 par une liaison 19. L'unité de commande 5 reçoit des informations d'état du véhicule par l'intermédiaire de liaisons 20, 21, 22 reliées à des capteurs de rotation d'un moteur d'entraînement 23 du véhicule non représenté, de vitesse du véhicule 24 et d'assiette du véhicule 25. Les capteurs 23, 24, 25 sont disposés de façon connue sur le véhicule automobile.

L'interrupteur 18 permet à un conducteur de commander manuellement un allumage du projecteur 1. A l'allumage du projecteur 1, l'unité de commande 5 commande l'actionneur 4 pour successivement rabattre et relever le projecteur 1. La variation d'orientation du projecteur 1 provoque une variation de la portée du faisceau lumineux 6 qui peut être détectée par le conducteur.

Dans un mode de mise en oeuvre, à l'allumage du projecteur 1, l'unité de commande 5 commande l'actionneur 4 pour rabattre le projecteur 1 dans une position Pm de portée minimale du faisceau 6. L'organe mobile 13 de l'actionneur 4 est déplacé vers le haut, jusqu'à atteindre une butée mécanique par exemple. Ensuite, l'unité de commande 5 commande l'actionneur 4 pour relever le projecteur 1 jusqu'à une position finale Pf, en arrêtant le projecteur 1 à au moins une position intermédiaire pendant une durée déterminée.

La position finale Pf est déterminée par l'unité de commande 5 à partir de l'information d'assiette du véhicule transmise par le capteur 25. L'assiette du véhicule est l'inclinaison de la caisse du véhicule par rapport à la chaussée. Selon la charge du véhicule, l'assiette de ce dernier varie ce qui modifie l'orientation du projecteur 1 par rapport à la chaussée et l'éclairage de la chaussée procuré par le projecteur 1 à l'avant du véhicule. Si le projecteur 1 est trop rabattu par rapport à la chaussée, la portée du faisceau lumineux est faible, et l'éclairage n'est pas satisfaisant. Si le projecteur 1 est trop relevé par rapport à la chaussée, l'éclairage n'est pas satisfaisant, et il existe un risque d'éblouir le conducteur d'un véhicule circulant en sens inverse. En fonction de l'assiette du véhicule, l'actionneur 4 permet d'adapter la position finale du projecteur 1 pour obtenir un éclairage satisfaisant de la chaussée.

Bien entendu, l'unité de commande 5 peut commander l'actionneur 4 pour relever ou rabattre le projecteur 1 alors que celui est déjà allumé, lorsque l'assiette du véhicule varie, par exemple lorsque le conducteur s'arrête pour faire monter un passager arrière.

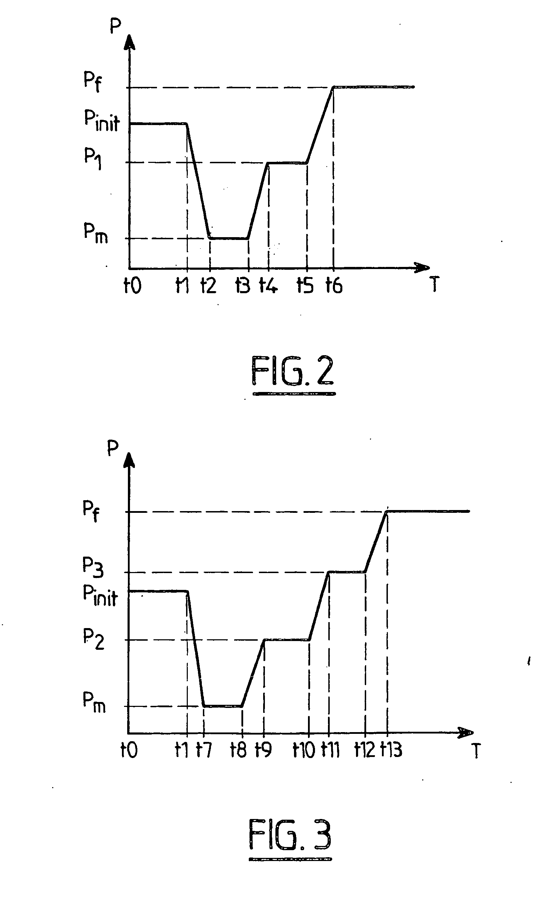

La figure 2 représente un graphique illustrant un mode de mise en oeuvre avec une position intermédiaire. Le temps T est reporté sur l'axe des abscisses, la position P est reportée sur l'axe des ordonnées. Plus la position P est élevée, plus la portée du faisceau lumineux 6 du projecteur 1 (fig. 1) est grande. Une position P donnée du projecteur 1 correspond à une position donnée de l'organe mobile 13 (fig. 1).

De l'instant t0 à l'instant t1, le projecteur 1 est dans une position initiale Pinit correspondant par exemple à sa position lors de la dernière extinction du projecteur 1. A t1, l'allumage du projecteur 1 est commandé par le conducteur. Le projecteur 1 est rabattu jusqu'à une position Pm de portée minimale du faisceau lumineux 6, puis le projecteur est maintenu dans cette position Pm entre un instant t2 et un instant t3. A partir de l'instant t3, le projecteur est relevé jusqu'à une position intermédiaire P1, puis maintenu dans cette position entre un instant t4 et un instant t5. A partir de l'instant t5, le projecteur est relevé jusqu'à une position finale Pf.

La position finale Pf est déterminée en fonction de l'assiette du véhicule. Dans l'exemple illustré, la position finale est supérieure à la position initiale Pinit. La position intermédiaire P1 est déterminée en fonction de la position Pm de portée minimale et la position finale Pf. La position intermédiaire P1 est à titre d'exemple nullement limitatif déterminée comme la position située entre la position Pm de portée minimale et la position finale Pf, c'est-à-dire que P1=(Pf - Pm)/2. Une telle détermination de la position intermédiaire P1 permet d'obtenir des positions régulièrement espacées pouvant mieux être distinguées par le conducteur ou par un passager. Dans l'exemple illustré, les durées d'immobilisation du projecteur 1 dans les positions de portée minimale Pm et intermédiaire P1 sont identiques, c'est-à-dire que t3 - t2 = t5 - t4.

La durée totale du cycle d'identification, c'est-à-dire la durée (t6 - t1) entre l'instant final t6 et l'instant t1 de commande d'allumage, est inférieure ou sensiblement égale à 3s, de préférence inférieure ou sensiblement égale à 2s, et notamment inférieure ou sensiblement égale à 1s. La durée du cycle d'identification est limitée afin de ne pas perturber le conducteur, notamment dans la situation ou le conducteur commande l'allumage des feux de croisement alors qu'il est déjà en situation de roulage.

On a évoqué la position P du projecteur 1 de façon générale. La position P du projecteur 1 peut être repérée par tout moyen approprié. Par exemple, on peut choisir comme référence le déplacement axial de l'organe mobile 13 de l'actionneur 4 (fig. 1). On peut également choisir comme référence le déplacement angulaire du réflecteur 3 par rapport à la chape 9 de la liaison pivot 8 (fig. 1).

La figure 3, similaire à la figure 2, illustre un mode de mise en oeuvre dans lequel le projecteur 1 est relevé de la position Pm de portée minimale vers la position finale Pf en étant immobilisé temporairement à deux positions intermédiaires distinctes P2, P3.

Le projecteur 1 est rabattu entre l'instant initial t1 et un instant t7 de la position initiale Pinit à la position Pm de portée minimale, puis maintenu dans cette position Pm jusqu'à un instant t8. Puis le projecteur 1 est relevé jusqu'à la position intermédiaire P2, atteinte à un instant t9 est maintenue jusqu'à un instant t10. Puis le projecteur 1 est relevé jusqu'à une seconde position intermédiaire P3 atteinte à un instant t11 et maintenue jusqu'à un instant t12. Puis le projecteur 1 est relevé jusqu'à la position finale Pf atteinte à un instant t13.

Les positions intermédiaires P2, P3 sont déterminées de façon à être régulièrement espacées entre la position Pm de portée minimale et la position finale Pf, afin de permettre une meilleure distinction entre les différentes positions, pour faciliter l'identification du véhicule. En d'autres terme P2 = (Pf - Pm)/3 et P3=2(Pf - Pm)/3.

Dans le mode de mise en oeuvre illustré, les durées d'immobilisation du projecteur 1 dans les positions de portée minimale Pm et intermédiaires P2, P3 sont identiques, c'est-à-dire que t8 - t7 = t10 - t9 = t12 - t11. Dans ce mode de mise en oeuvre également, la durée totale du cycle d'identification, c'est-à-dire la durée (t13 - t1) entre l'instant final t13 et l'instant t1 de commande d'allumage, est inférieure ou sensiblement égale à 3s, de préférence inférieure ou sensiblement égale à 2s, et notamment inférieure ou sensiblement égale à 1s.

Bien entendu, on pourrait choisir des positions intermédiaires non régulièrement réparties, ou des durées d'immobilisation différentes sans sortir du cadre de l'invention. Dans une variante, le nombre de positions intermédiaires est supérieur ou égal à trois.

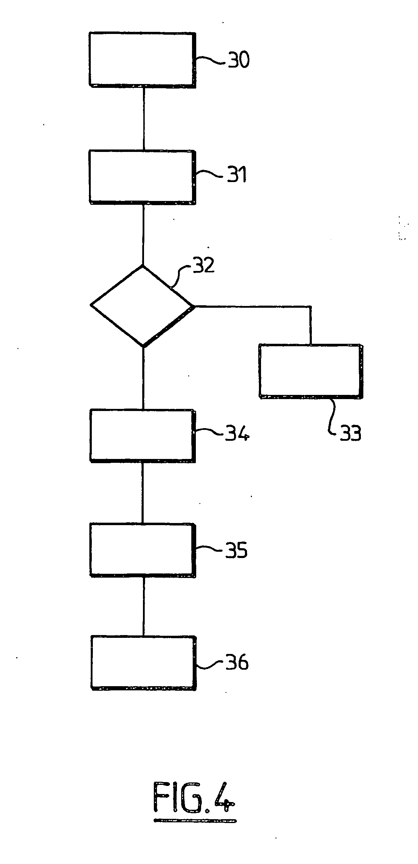

Sur la figure 4, un schéma-bloc illustre les étapes d'un procédé d'identification d'un véhicule automobile pourvu d'un dispositif d'éclairage à projecteurs à position variable.

Lors d'une étape 30, on commande l'allumage des projecteurs du véhicule. Les projecteurs se trouvent dans une position intiale Pinit. Lors d'une étape 31, on détermine en fonction de l'assiette du véhicule la position finale Pf des projecteurs permettant un éclairage satisfaisant de la chaussée, sans éblouir le conducteur d'un véhicule circulant en sens inverse. Lors d'une étape suivante 32, on compare la vitesse du véhicule V à une vitesse de seuil Vseuil. Si la vitesse V est supérieure à Vseuil, on modifie la position des projecteurs pour atteindre directement la position finale Pf (étape 33). Si la vitesse V est inférieure à la vitesse seuil Vseuil, on passe à une étape 34.

Lors de l'étape 34 on détermine une ou plusieurs positions intermédiaires située entre une position de portée minimale Pm des projecteurs et la position finale Pf. Lors d'une étape suivante 35 on abaisse les projecteurs jusqu'à la position de portée minimale Pm, puis on maintient les projecteurs dans la position de portée minimale Pm pendant une durée déterminée. Lors d'une étape suivante 36 on relève les projecteurs de la position de portée minimale Pm à la position finale Pf en arrêtant temporairement les projecteurs dans les positions intermédiaires.

La vitesse de seuil peut par exemple être de l'ordre de 15km/h. Dans la situation où le véhicule roule à vitesse élevée, il est important de pouvoir procurer un éclairage satisfaisant de la chaussée dès la commande d'allumage des feux, pour éviter toute situation dangereuse. Dans le cas où la vitesse du véhicule est supérieure à la vitesse seuil Vseuil, la position des projecteurs est directement commandée pour fournir un éclairage suffisant.

Dans une variante, l'étape 32 est remplacée par une étape dans laquelle on détermine si le véhicule est à l'arrêt ou non. Si le véhicule est à l'arrêt, on passe à l'étape 34, sinon on passe à l'étape 33. En d'autre terme, le cycle d'identification n'est commandé que pour une vitesse nulle du véhicule.

Dans une autre variante, l'étape 32 est remplacée par une étape dans laquelle on détermine si le moteur du véhicule automobile est tournant ou non. Si le moteur est non tournant, on passe à l'étape 34, sinon on passe à l'étape 33. Au contraire, on peut passer à l'étape 34 si le moteur est tournant et à l'étape 33 si le moteur est non tournant.

Bien entendu, sans sortir du cadre de l'invention, on peut obtenir des variantes par des combinaisons des variantes décrites ci-dessus.

On a décrit un dispositif comprenant un projecteur pour des raisons de clarté du dessin. Bien entendu, le procédé de commande d'allumage est adapté pour un dispositif comportant une pluralité de projecteur, par exemple deux projecteurs.

A l'allumage des projecteurs, ces derniers sont d'abord rabattus à leur position de portée minimale Pm puis relevé vers leur position finale Pf déterminée pour procurer un éclairage satisfaisant sans éblouir des conducteurs venant en sens inverse. Lors du cycle d'allumage, les projecteurs ne sont pas relevés à une position supérieure à la position finale Pf, évitant ainsi un éblouissement d'un conducteur venant en sens inverse.

## Revendications

1. Procédé de commande d'allumage du dispositif d'éclairage d'un véhicule automobile comportant une étape (30) dans laquelle des projecteurs (1) sont allumés, puis une étape (35) dans laquelle on rabat les projecteurs (1) dans une position de portée minimale (Pm), **caractérisé par le fait que** l'étape (35) dans laquelle on rabat les projecteurs dans une position de portée minimale est suivie d'une étape (36) dans laquelle on relève les projecteurs (1) de la position de portée minimale (Pm) vers une position finale (Pf) en arrêtant les projecteurs (1) dans au moins une position intermédiaire (P1, P2, P3) pendant une durée déterminée.

2. Procédé selon la revendication 1, **caractérisé par le fait que** le procédé comporte une étape (31) dans laquelle on détermine la position finale (Pf) en fonction de l'assiette du véhicule.

3. Procédé selon l'une quelconque des revendications 1 ou 2, **caractérisé par le fait qu**'une position intermédiaire (P1, P2, P3) est déterminée en fonction de la position finale (Pf), de la position de portée minimale (Pm) et/ou du nombre de positions intermédiaires (P1, P2, P3).

4. Procédé selon l'une quelconque des revendications précédentes, **caractérisé par le fait que** la durée totale du cycle d'allumage est inférieure ou égale à 3s, de préférence inférieure ou égale à 2s et notamment inférieure ou égale à 1 s.

5. Procédé selon la revendication 4, **caractérisé par le fait que** la durée d'arrêt dans une position intermédiaire est déterminée en fonction d'une durée totale.

6. Procédé selon l'une quelconque des revendications précédentes, **caractérisé par le fait que** les positions intermédiaires (P1, P2, P3) sont réparties régulièrement entre la position de portée minimale (Pm) et la position finale (Pf).

7. Procédé selon la revendication 1, **caractérisé par le fait que** le procédé comporte une étape (32) suivant l'étape (30) d'allumage des projecteurs (1), dans laquelle la vitesse (V) du véhicule est mesurée.

8. Procédé selon la revendication 7, **caractérisé par le fait que**, si la vitesse (V) mesurée est inférieure à une vitesse de seuil (Vs) de l'ordre de 15km/h, l'étape (35), dans laquelle on rabat les projecteurs (1) dans une position de portée minimale (Pm), et l'étape (36), dans laquelle on relève les projecteurs (1) de la position de portée minimale (Pm) vers une position finale (Pf) en arrêtant les projecteurs (1) dans au moins une position intermédiaire (P1, P2, P3) pendant une durée déterminée, sont exécutées.

9. Procédé selon la revendication 7, **caractérisé par le fait que**, si la vitesse (V) mesurée est supérieure à une vitesse de seuil (Vs) de l'ordre de 15km/h, le procédé comporte une étape (33) dans laquelle les projecteurs (1) passent directement à la position de portée finale (Pf).

10. Procédé selon la revendication 1, **caractérisé par le fait que** le procédé comporte une étape (32) suivant l'étape (30) d'allumage des projecteurs (1) dans laquelle on détecte si le moteur du véhicule tourne.

11. Véhicule automobile comprenant un dispositif d'éclairage pourvu de projecteurs (1) comprenant un réflecteur mobile (3), un actionneur (4) capable de rabattre et relever le réflecteur (3), des,moyens capteurs de l'état du véhicule, et des moyens de commande (5) pour la mise en oeuvre du procédé selon la revendication 1.

12. Véhicule selon la revendication 11, **caractérisé par le fait que** les moyens capteurs comprennent un capteur de vitesse du véhicule, un capteur d'état de fonctionnement du moteur et/ou un capteur d'assiette du véhicule.

## Claims

1. Method for controlling the illumination of the lighting system of a motor vehicle comprising a step (30) in which the headlights (1) are illuminated, then a step (35) in which the headlights (1) are lowered into a minimum range position (Pm), **characterized in that** the step (35) in which the headlights are lowered into a minimum range position is followed by a step (36) in which the headlights (1) are raised from the minimum range position (Pm) towards a final position (Pf) stopping the headlights (1) in at least one intermediate position (P1, P2, P3) for a preset time.

2. Method according to Claim 1, **characterized in that** the method comprises a step (31) in which the final position (Pf) is determined according to the suspension height of the vehicle.

3. Method according to either one of Claims 1 or 2, **characterized in that** one intermediate position (P1, P2, P3) is determined according to the final position (Pf), the minimum range position (Pm) and/or the number of intermediate positions (P1, P2, P3).

4. Method according to any one of the preceding claims, **characterized in that** the total illumination cycle time is less than or equal to 3 seconds, preferably less than or equal to 2 seconds and in particular less than or equal to 1 second.

5. Method according to Claim 4, **characterized in that** the stopping time in one intermediate position is determined according to a total time.

6. Method according to any one of the preceding claims, **characterized in that** the intermediate positions (P1, P2, P3) are evenly spaced between the minimum range position (Pm) and the final position (Pf).

7. Method according to Claim 1, **characterized in that** the method comprises a step (32) following the illumination step (30) of the headlights (1), in which the speed (V) of the vehicle is measured.

8. Method according to Claim 7, **characterized in that**, if the measured speed (V) is less than a threshold speed (Vs) of the order of 15 km/h, the step (35), in which the headlights (1) are lowered into a minimum range position (Pm), and the step (36), in which the headlights (1) are raised from the minimum range position (Pm) towards a final position (Pf) stopping the headlights (1) in at least one intermediate position (P1, P2, P3) for a preset time, are carried out.

9. Method according to Claim 7, **characterized in that**, if the measured speed (V) is more than a threshold speed (Vs) of the order of 15 km/h, the method comprises a step (33) in which the headlights (1) go directly to the final range position (Pf).

10. Method according to Claim 1, **characterized in that** the method comprises a step (32) following the illumination step (30) of the headlights (1) in which whether the engine of the vehicle is running is detected.

11. Motor vehicle including a lighting system provided with headlights (1) including a moving reflector (3), an actuator (4) capable of lowering and raising the reflector (3), means for sensing the state of the vehicle, and control means (5) for the use of the method according to Claim 1.

12. Vehicle according to Claim 11, **characterized in that** the sensing means include a vehicle speed sensor, an engine operating state sensor and/or a vehicle suspension height sensor.

## Patentansprüche

1. Verfahren zur Einschaltsteuerung der Beleuchtungsvorrichtung eines Kraftfahrzeugs, umfassend einen Schritt (30), in dem Scheinwerfer (1) eingeschaltet werden, dann einen Schritt (35), in dem die Scheinwerfer (1) in eine Position mit minimaler Reichweite (Pm) umgelegt werden, **dadurch gekennzeichnet, dass** auf den Schritt (35), in dem die Scheinwerfer in eine Position mit minimaler Reichweite umgelegt werden, ein Schritt (36) folgt, in dem die Scheinwerfer (1) von der Position mit minimaler Reichweite (Pm) in eine Endposition (Pf) angehoben werden, wobei die Scheinwerfer (1) in mindestens einer Zwischenposition (P1, P2, P3) während einer bestimmten Dauer angehalten werden.

2. Verfahren nach Anspruch 1, **dadurch gekennzeichnet, dass** das Verfahren einen Schritt (31) umfasst, in dem die Endposition (Pf) in Abhängigkeit von der Trimmlage des Fahrzeugs bestimmt wird.

3. Verfahren nach einem der Ansprüche 1 oder 2, **dadurch gekennzeichnet, dass** eine Zwischenposition (P1, P2, P3) in Abhängigkeit von der Endposition (Pf), der Position mit minimaler Reichweite (Pm) und/oder der Anzahl von Zwischenpositionen (P1, P2, P3) bestimmt wird.

4. Verfahren nach einem der vorhergehenden Ansprüche, **dadurch gekennzeichnet, dass** die Gesamtdauer des Einschaltzyklus geringer oder gleich 3s, vorzugsweise geringer oder gleich 2s und insbesondere geringer oder gleich 1s ist.

5. Verfahren nach Anspruch 4, **dadurch gekennzeichnet, dass** die Anhaltedauer in einer Zwischenposition in Abhängigkeit von einer Gesamtdauer bestimmt wird.

6. Verfahren nach einem der vorhergehenden Ansprüche, **dadurch gekennzeichnet, dass** die Zwischenpositionen (P1, P2, P3) regelmäßig zwischen der Position mit minimaler Reichweite (Pm) und der Endposition (Pf) verteilt sind.

7. Verfahren nach Anspruch 1, **dadurch gekennzeichnet, dass** das Verfahren einen Schritt (32) nach dem Schritt (30) des Einschaltens der Scheinwerfer (1) umfasst, in dem die Geschwindigkeit (V) des Fahrzeugs gemessen wird.

8. Verfahren nach Anspruch 7, **dadurch gekennzeichnet, dass**, wenn die gemessene Geschwindigkeit (V) geringer als eine Schwellengeschwindigkeit (Vs) von ungefähr 15 km/h ist, der Schritt (35), in dem die Scheinwerfer (1) in eine Position mit minimaler Reichweite (Pm) umgelegt werden, und der Schritt (36), in dem die Schweinwerfer (1) von der Position mit minimaler Reichweite (Pm) in eine Endposition (Pf) angehoben werden, wobei die Scheinwerfer (1) in mindestens einer Zwischenposition (P1, P2, P3) während einer bestimmten Dauer angehalten werden, ausgeführt werden.

9. Verfahren nach Anspruch 7, **dadurch gekennzeichnet, dass**, wenn die gemessene Geschwindigkeit (V) größer als eine Schwellengeschwindigkeit (Vs) von ungefähr 15 km/h ist, das Verfahren einen Schritt (33) umfasst, in dem die Scheinwerfer (1) direkt in die Position mit endgültiger Reichweite (Pf) übergehen.

10. Verfahren nach Anspruch 1, **dadurch gekennzeichnet, dass** das Verfahren einen Schritt (32) nach dem Schritt (30) des Einschaltens der Scheinwerfer (1) umfasst, in dem erfasst wird, ob sich der Motor des Fahrzeugs dreht.

11. Kraftfahrzeug, umfassend eine Einschaltvorrichtung, die mit Scheinwerfern (1) versehen ist, umfassend einen beweglichen Rückstrahler (3), ein Betätigungselement (4), das den Rückstrahler (3) umlegen und anheben kann, Mittel zur Erfassung des Zustandes des Fahrzeugs und Steuermittel (5) für den Einsatz des Verfahrens nach Anspruch 1.

12. Fahrzeug nach Anspruch 11, **dadurch gekennzeichnet, dass** die Erfassungsmittel einen Sensor für die Geschwindigkeit des Fahrzeugs, einen Sensor für den Betriebszustand des Motors und/oder einen Sensor für die Trimmlage des Fahrzeugs umfassen.
